# EUROPÄISCHE PATENTSCHRIFT

(11) **EP 2 242 938 B1**
(45) Veröffentlichungstag und Bekanntmachung des Hinweises auf die Patenterteilung: **20.06.2012**
(21) Anmeldenummer: 09730388.7
(22) Anmeldetag: 09.04.2009
(51) Int. Cl.: F16D 3/68, F16D 3/76

(54) **DREHELASTISCHE KUPPLUNG UND VERFAHREN ZUM HERSTELLEN DERSELBEN**
COUPLING HAVING A HIGH TORSIONAL FLEXIBILITY AND METHOD FOR PRODUCING THE SAME
RACCORD ÉLASTIQUE EN ROTATION ET PROCÉDÉ DE FABRICATION DE CELUI-CI

(30) Priorität: 11.04.2008 DE 102008018349
(43) Veröffentlichungstag der Anmeldung: 27.10.2010
(73) Patentinhaber: Voith Patent GmbH, 89522 Heidenheim (DE)
(72) Erfinder: BECKER, Markus, K., 44388 Dortmund (DE); FROHS, Peter, 42549 Velbert (DE); MARCINKOWSKI, Maik, 44809 Bochum (DE); HOLZAPFEL, Michael, 89522 Heidenheim (DE); BACHMANN, Michael, 89522 Heidenheim (DE); JAROS, Michael, 89518 Heidenheim (DE)
(74) Vertreter: Dr. Weitzel & Partner
(86) Internationale Anmeldenummer: PCT/EP2009/002626
(87) Internationale Veröffentlichungsnummer: WO 2009/124758

(56) Entgegenhaltungen:
- DE-A1- 2 733 880
- GB-A- 538 625
- US-A- 2 363 469

## Beschreibung

Die Erfindung betrifft drehelastische Kupplungen, insbesondere für einen Antriebsstrang eines Schienenfahrzeugs, beispielsweise in der Triebverbindung zwischen einem Antriebsmotor und einem Getriebe oder zwischen dem Getriebe und Antriebsrädern, insbesondere einer Radsatzwelle.

Herkömmlich werden in Antriebssträngen von Schienenfahrzeugen, insbesondere in der Triebverbindung zwischen der Getriebeabtriebswelle und einer Radsatzwelle sogenannte Keilpaketkupplungen verwendet. Solche Keilpaketkupplungen werden beispielsweise in den folgenden Dokumenten offenbart:
DE 34 03 910 A1
DE 196 39 304 B4
DE 199 58 367 A1.

Solche Keilpaketkupplungen sind in der Lage, sehr hohe Drehmomente von einigen hunderten oder mehr als tausend Newtonmeter zu übertragen und gleichzeitig einen gewissen axialen, radialen oder winkligen Versatz zwischen den Bauteilen, insbesondere Wellen, die an der Kupplung starr angeschlossen sind, auszugleichen. Dabei kommt es auf eine Kombination aus hoher Torsionssteifigkeit bei gleichzeitig befriedigender axialer, radialer und winkliger Verlagerbarkeit an. Zugleich sollen die Kupplungen eine vergleichsweise große Zentrierkraft für eine Selbstzentrierung der beiden angeschlossenen Bauteile oder Wellen zur Verfügung stellen.

Die Keilpaketkupplungen weisen zwei Kupplungssteme auf, zwischen deren sich in Radialrichtung hinterschneidenden Armen keilförmige Gummielemente eingebracht sind, um eine Kraft in Umfangsrichtung zu übertragen. Um besonders große Kräfte beziehungsweise Momente übertragen zu können, sind die Gummielemente auch häufig vorgespannt zwischen die beiden sie einschließenden Arme eingebracht.

Obwohl die bekannten Keilpaketkupplungen, insbesondere in Schienenfahrzeugantriebssträngen oder sonstigen Kraftfahrzeugantriebssträngen, zuverlässig arbeiten, weisen sie den Nachteil auf, dass sie vergleichsweise teuer in der Herstellung sind.

Zum weiteren Stand der Technik außerhalb von Keilpaketkupplungen, wie sie in Schienenfahrzeugantriebssträngen eingesetzt werden, wird auf die Offenlegungsschrift DE 195 15 103 A1 verwiesen, welche eine Vielkeilwellenverbindung mit zwei axial ineinander verschiebbaren Rohren zeigt, die über ein Elastomer federnd aneinander abgestützt sind. Ferner zeigt die Patentschrift DE 38 22 637 C2 eine elastische verdrehsichere Welle-Nabeverbindung, sowie die Offenlegungsschrift DE 1 575 892 A eine elastische Kupplung mit einzelnen zwischen Vorsprüngen an einem Innenteil und Vorsprüngen an einem Außenteil eingelegten Gummielementen. Schließlich zeigt die Offenlegungsschrift DE 10 2004 051 340 A1 einen Antriebsstrang, insbesondere für Fahrzeuge, bei welchem zwischen zwei Rohren ein Drahtkissen eingelegt ist, um bei einer Relativtorsion der beiden Rohre in einem ersten Winkelbereich eine relativ flache Kennlinie und daran anschließend einen Bereich mit starker Kennlinienprogression zu erreichen.

DE-A1-2733880 offenbart eine gattungsgemäße drehelastische Kupplung.

Der vorliegenden Erfindung liegt die Aufgabe zugrunde, eine drehelastische Kupplung, insbesondere für einen Fahrzeugantriebsstrang, beispielsweise Schienenfahrzeugantriebsstrang, anzugeben, welche mindestens dieselbe hohe Torsionssteifigkeit bei gleichzeitig befriedigender axialer, radialer und winkliger Verlagerbarkeit der beiden Kupplungshälften wie herkömmliche Keilpaketkupplungen aufweist, jedoch deutlich kostengünstiger herstellbar ist. Ferner soll ein Verfahren zum Herstellen einer solchen drehelastischen Kupplung angegeben werden.

Die erfindungsgemäße Aufgabe wird durch eine drehelastische Kupplung und ein Verfahren gemäß der unabhängigen Ansprüche gelöst. In den abhängigen Ansprüchen sind vorteilhafte und besonders zweckmäßige Ausgestaltungen der Erfindung angegeben.

Eine erfindungsgemäße drehelastische Kupplung weist einen Innenring und einen Außenring auf. Der Außenring umschließt den Innenring in Umfangsrichtung, so dass zwischen dem Innenring und dem Außenring, genauer zwischen dem radial äußeren Umfang des Innenrings und dem radial inneren Umfang des Außenrings, ein Ringspalt ausgebildet wird. Der Ringspalt erstreckt sich in der Regel über 360 Grad, das bedeutet, dass sich Innenring und Außenring über ihren Umfang an keiner Stelle berühren.

In den Ringspalt ist erfindungsgemäß ein Elastomer eingebracht, das am Innenring und am Außenring anvulkanisiert oder angeklebt ist und den Ringspalt vollständig oder im Wesentlichen vollständig ausfüllt. Der Ringspalt weist dabei eine Mäanderform auf, die derart gestaltet ist, dass sich radial nach außen gerichtete Vorsprünge des Innenrings mit radial nach innen gerichteten Vorsprüngen des Außenrings hinterschneiden. Das bedeutet, wenn ein Drehmoment auf den Innenring oder den Außenring aufgebracht wird, so wird dieses Drehmoment sowohl durch elastische Druckkräfte, die dadurch entstehen, dass sich die Vorsprünge des Innenrings und des Außenrings in Umfangsrichtung aufeinanderzu bewegen, als auch durch elastische Scherkräfte innerhalb des Elastomers und zwischen Elastomer und Innenring und Elastomer und Außenring sowie in gewissem Umfang auch durch elastische Zugkräfte im Elastomer zwischen dem Innenring und dem Außenring übertragen.

Erfindungsgemäß ist in das Elastomer in Umfangsrichtung der drehelastischen Kupplung beidseits der Vorsprünge des Innenrings und beidseits der Vorsprünge des Außenrings jeweils eine beziehungsweise wenigstens eine Entlastungsöffnung eingebracht. Anstelle der Bezeichnung Entlastungsöffnung könnte man auch den Begriff Entlastungsaussparung verwenden, wobei die Aussparungen beziehungsweise die Öffnungen grundsätzlich eine beliebige Form aufweisen können, beispielsweise die Form einer Durchgangsöffnung, die vollständig durch das Elastomer hindurchreicht, oder die Form eines Sackloches, welches nur einseitig ein offenes Ende aufweist. Die Entlastungsöffnungen, die insbesondere einen kreisförmigen Querschnitt, vorteilhaft eine Zylinderform aufweisen, vermindern zum einen eine Kerbwirkung im Elastomer an den Spitzen der Vorsprünge des Innenrings und des Außenrings und verhindern ferner, dass das Elastomer aus den Druckzonen zwischen den Vorsprüngen über die Vorsprünge hinweg kriecht. Hierdurch ist es im Gegensatz zu einer Kupplung mit einem Elastomer zwischen einem Innenring und einem Außenring mit sich hinterschneidenden Vorsprüngen, wobei das Elastomer keine solchen Entlastungsöffnungen beidseits der Vorsprünge aufweist, möglich, die Kupplung zur Übertragung besonders hoher Drehmomente zu verwenden und trotzdem eine lange Lebensdauer aufgrund eines extrem geringen Verschleißes beziehungsweise einer äußerst geringen Ermüdung zu gewährleisten.

Besonders vorteilhaft sind die Entlastungsöffnungen in unmittelbarer Nähe zu jedem freien Ende jedes Vorsprungs in Umfangsrichtung auf jeder Seite des jeweiligen Vorsprungs eingebracht, wobei insbesondere auf jeder Seite eine einzige Entlastungsöffnung eingebracht sein kann. Wenn nämlich die Entlastungsöffnungen in dieser Nähe zum Ende der Vorsprünge vorgesehen sind, so wird hierdurch wirkungsvoll ein Kriechen des Elastomers über die Vorsprünge hinweg vermieden.

Die Positionierung der Entlastungsöffnungen in unmittelbarer Nähe zu den freien Enden der Vorsprünge, beispielsweise im Bereich der Spitze eines Dreiecks, jedoch beidseitig der Spitze, kann insbesondere derart ausgeführt sein, dass die Entlastungsöffnungen im Wesentlichen radial innerhalb der radial nach innen gerichteten Vorsprünge und radial außerhalb der radial nach außen gerichteten Vorsprünge positioniert sind. Alternativ kann die Positionierung der Entlastungsöffnungen auch auf dem jeweiligen Radius, das heißt auf dem inneren Radius der radial nach innen gerichteten Vorsprünge und dem äußeren Radius der radial nach außen gerichteten Vorsprünge vorgesehen sein.

Gemäß einer vorteilhaften Ausführungsform sind der Innenring und der Außenring ausschließlich über das Elastomer aneinander befestigt und somit in Umfangsrichtung, in Radialrichtung und in Axialrichtung beziehungsweise im Hinblick auf eine winkelige Verlagerbarkeit zwischen Innenring und Außenring elastisch aneinander angeschlossen. Das Elastomer ist vorteilhaft frei von einem eingebetteten Drahtgeflecht und insbesondere das einzige Material zwischen dem Innenring und dem Außenring.

Besonders vorteilhaft werden die Entlastungsöffnungen vollständig vom Elastomer umschlossen, im Gegensatz zu randoffenen Öffnungen, die zumindest teilweise durch das Material des Innenrings oder des Außenrings umschlossen werden.

Aufgrund der vorgesehenen Entlastungsöffnungen beidseits der Vorsprünge ist es möglich, die Vorsprünge am Innenring und/oder am Außenring zahnförmig zu gestalten, insbesondere jeweils in Form eines spitzwinkligen Dreieckes, beispielsweise mit linearen Schenkeln. Die Symmetrielinie eines solchen Dreiecks, welches insbesondere gleichschenklig ist, verläuft vorteilhaft in Radialrichtung der drehelastischen Kupplung. Ein solches spitzwinkliges Dreieck kann jedoch auch geneigt gegenüber der Radialrichtung der drehelastischen Kupplung ausgeführt sein, wobei sich dann in der Regel statt gleiche Seitenlängen verschiedene Seitenlängen ergeben.

Der Innenring und/oder der Außenring weisen vorteilhaft auf der dem Elastomer abgewandten Seite einen kreisrunden Umfang, insbesondere einen zylinderförmigen Umfang auf. Dabei weist der zylinderförmige äußere Umfang des Außenrings und/oder der zylinderförmige innere Umfang des Innenrings gemäß einer Ausführungsform einen konstanten Durchmesser oder einem im Wesentlichen konstanten Durchmesser auf.

Sowohl der Innenring als auch der Außenring können einteilig ausgeführt sein. Es ist jedoch auch möglich, den Innenring und/oder den Außenring beispielsweise aus einzelnen, aneinander angrenzenden Ringsegmenten zusammenzusetzen. Besonders, wenn der Außenring einen verhältnismäßig großen Durchmesser aufweist, kann diese Segmentierung Vorteile bei der Herstellung bieten.

Die drehelastische Kupplung kann besonders vorteilhaft derart ausgeführt sein, dass sie Anschlussflächen für die beiden mittels ihr zu verbindenden Bauteile aufweist, die an einer oder beiden Stirnseiten der drehelastischen Kupplung ausgeführt sind und insbesondere senkrecht zur Drehachse beziehungsweise Mittelpunktsachse der drehelastischen Kupplung verlaufen. So kann beispielsweise eine erste axial gerichtete Stirnseite zum drehfesten Anschluss einer ersten Welle oder sonstigen Anschlusselementes dienen, und die entgegengesetzte, zweite axial gerichtete Stirnseite kann zum drehfesten Anschluss einer zweiten Welle oder sonstigen Anschlusselementes dienen. Hierfür sind vorteilhaft in den Anschlussflächen Anschlussbohrungen vorgesehen, mittels welchen die anzuschließenden Wellen oder sonstigen Anschlusselemente an der drehelastischen Kupplung axial angeflanscht werden können. Die Bohrungen verlaufen insbesondere parallel zur Drehachse beziehungsweise Mittelpunktachse der drehelastischen Kupplung, und die Stirnseiten sind vorzugsweise parallel zueinander.

Die drehelastische Kupplung kann gemäß eines erfindungsgemäßen Herstellungsverfahrens dadurch hergestellt werden, dass zunächst der Innenring und der Außenring oder bei segmentierten Ausführungsformen Ringsegmente derselben getrennt voneinander hergestellt werden. Getrennt voneinander hergestellt bedeutet dabei, dass Innenring und Außenring als nicht miteinander verbundene Einzelteile zur Verfügung gestellt werden.

Nach ihrer Herstellung werden der Innenring und der Außenring konzentrisch ineinander positioniert, so dass sich der Ringspalt ergibt und sich die Vorsprünge radial außen auf dem Innenring und radial innen auf dem Außenring hinterschneiden. Vorteilhaft erfolgt die Positionierung derart, dass sich Innenring und Außenring an keiner Stelle berühren.

In der Regel vor der Positionierung wird der Außenring auf seinem radial inneren Umfang beziehungsweise auf seiner radial inneren Oberfläche und der Innenring auf seinem radial äußeren Umfang beziehungsweise auf seiner radial äußeren Oberfläche mit einem Haftvermittler versehen. Als Haftvermittler beziehungsweise Primer kommen übliche Anstriche, Beschichtungen oder sonstige auf die Oberfläche aufgebrachte Substanzen in Betracht. Es ist jedoch auch denkbar, die Haftung des Elastomers an der Oberfläche dadurch zu verbessern, dass strukturelle Maßnahmen an der Oberfläche vorgesehen werden.

Es wird eine vorgegebene Anzahl von Stiften, insbesondere Zylinderstiften, zur Verfügung gestellt, deren äußere Oberfläche frei von einem Haftvermittler ist, das heißt, deren Oberfläche derart geschaffen ist, dass das Elastomer nicht oder zumindest weniger als an der Oberfläche des Innenrings und des Außenrings an der Zylinderstiftoberfläche haftet. Unter dem Begriff Stift ist jede beliebige Form von Platzhaltern zu verstehen.

Der Ringspalt wird nach der genannten Positionierung von Innenring und Außenring und dem Vorsehen der haftvermittelnden Oberfläche am Innenring und Außenring mit einem Elastomer ausgegossen beziehungsweise ein Elastomer wird in den Ringspalt eingespritzt oder auch anders eingebracht, wobei die Stifte in das Elastomer eingebracht werden, bevor dieses ausgehärtet beziehungsweise abgebunden ist. Das Einbringen der Stifte kann bereits vor dem Gießen beziehungsweise Einspritzen oder anderweitigen Einbringen, beim Gießen/Einspritzen/Einbringen oder nach dem Gießen/Einspritzen/Einbringen, insbesondere unmittelbar nach dem Gießen/Einspritzen/Einbringen erfolgen.

Das Aushärten (Abbinden) des Elastomers wird vorteilhaft durch Aufheizen, insbesondere durch Backen des Elastomers bewirkt. In der Regel erfolgt dabei eine Aufheizung beziehungsweise ein Backen sowohl des Innenrings, des Außenrings, des Elastomers als auch der Stifte.

Nach dem Aufheizen und in der Regel nach einem darauffolgenden Abkühlen werden Zentrierbohrungen in den Innenring und/oder Außenring eingebracht, in welche dann Zentrierstifte eingesetzt werden können. Alternativ oder zusätzlich können die Zentrierstifte auch durch andere Maßnahmen am Innenring und/oder am Außenring montiert werden. Die Zentrierbohrungen beziehungsweise die Zentrierstifte dienen anschließend der Zentrierung der drehelastischen Kupplung an den Wellen oder Anschlusselementen, welche mittels der drehelastischen Kupplung elastisch miteinander verbunden werden.

Ein Vorteil des Einbringens von Zentrierbohrungen beziehungsweise des Montierens von Zentrierstiften erst nach dem Aufheizen der drehelastischen Kupplung, um das Elastomer zu verfestigen, liegt darin, dass bei dem Aufheizvorgang beziehungsweise bei einem nachfolgenden Abkühlvorgang sich eine Unwucht in der drehelastischen Kupplung ergeben kann. Bei rotationssymmetrischen Bauteilen, wie die erfindungsgemäße drehelastische Kupplung gemäß einer Ausführungsform, erfolgt üblicherweise eine Zentrierung an einem Anschlusselement dadurch, dass das Bauteil beziehungsweise die Kupplung mit einem Zentrierbund versehen wird, der beispielsweise durch eine spanende Drehbearbeitung (durch Abdrehen) eingebracht wird. Gemäß einer Ausführungsform ist die drehelastische Kupplung, oder zumindest der Außenring oder der Innenring jedoch frei von einem Zentrierbund, sondern die Zentrierung erfolgt allein durch die genannten Zentrierstifte.

Die Erfindung soll nachfolgend anhand eines Ausführungsbeispiels exemplarisch beschrieben werden. Es zeigen:
- Figur 1: eine stirnseitige Draufsicht auf eine erfindungsgemäße Ausführungsform einer drehelastischen Kupplung;
- Figur 2: einen Axialschnitt durch die drehelastische Kupplung gemäß der Figur 1;
- Figur 3: eine dreidimensionale Draufsicht auf die drehelastische Kupplung gemäß der Figur 1;
- Figur 4: eine axiale Draufsicht auf ein Segment der drehelastischen Kupplung, bestehend aus einem Innenringsegment, einem Außenringsegment und dem dort zwischen eingebrachten Elastomer, sowie einen Axialschnitt durch das Segment.

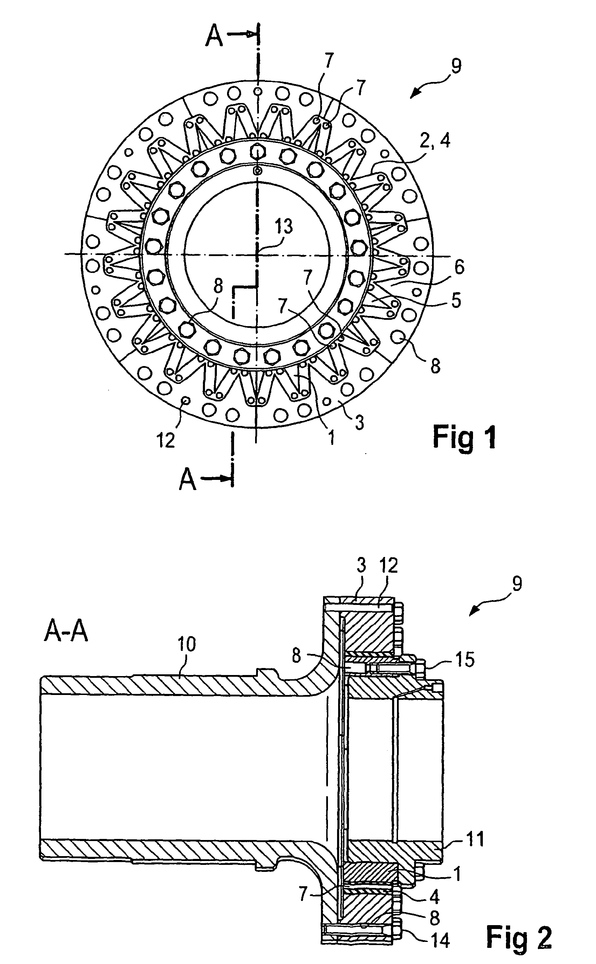

In der Figur 1 erkennt man eine drehelastische Kupplung 9, umfassend einen Innenring 1 sowie einen Außenring 2, wobei Innenring 1 und Außenring 2 in Umfangsrichtung segmentiert ausgeführt sind. Vorliegend sind über dem Umfang sieben Segmente vorgesehen. Selbstverständlich ist es möglich, eine andere Segmentzahl vorzusehen.

Der Innenring 1 weist radial nach außen gerichtete Vorsprünge 5 auf, und der Außenring 3 weist radial nach innen gerichtete Vorsprünge 6 auf. Die Vorsprünge 5, 6 sind zahnförmig mit einer Spitze am radial äußeren Ende ausgeführt. Der Innenring 1 und der Außenring 3 begrenzen gemeinsam einen mäanderförmigen Ringspalt 2, der mit einem Elastomer 4 vollständig ausgefüllt ist, mit Ausnahme von im Elastomer 4 eingebrachten Entlastungsöffnungen 7. Wie man sieht, ist in unmittelbarer Nähe zu jedem freien Ende beziehungsweise zu jeder Spitze jedes Vorsprungs 5, 6 in Umfangsrichtung auf jeder Seite des Vorsprungs 5, 6 jeweils eine einzige Entlastungsöffnung 7, vorliegend als zylinderförmige Öffnung ausgebildet, eingebracht. Trotz Vorsehen dieser Entlastungsöffnungen 7 ist der gesamte innere Umfang des äußeren Ringes 3 und der gesamte äußere Umfang des inneren Ringes 1, zumindest über einem vorgegebenen axialen Abschnitt, mit dem Elastomer 4 verbunden.

Die Verbindung zwischen dem Innenring 1, dem Außenring 3 und dem Elastomer 4 ist eine unlösbare Verbindung, das heißt, diese Verbindung kann nur durch Abreißen beziehungsweise Zerstören des Elastomers 4 gelöst werden.

Sowohl der Innenring 1 als auch der Außenring 3 weisen parallel zur Drehachse 13 eine Vielzahl von Anschlussbohrungen 8 auf, zum Anflanschen von mittels der drehelastischen Kupplung 9 zu verbindenden Bauteilen.

In der Figur 2 sind neben den zuvor beschriebenen Elementen eine erste Welle 10 und eine zweite Welle 11 als über die drehelastische Kupplung 9 miteinander zu verbindende Bauteile dargestellt. Die erste Welle 10 ist über eine Flanschverschraubung 14, wobei die Schrauben durch die Anschlussbohrungen 8 hindurchgeführt sind, stirnseitig am Außenring 3 montiert. Zur Zentrierung des Außenringes 3 mit der ersten Welle 11 dient eine Vielzahl von Zentrierstiften 12, die ebenfalls in der Figur 1 zu erkennen sind, wobei bei der gezeigten Ausführungsform je Segment ein einziger Zentrierstift 12 vorgesehen ist.

Die zweite Welle 11 ist ebenfalls über eine Flanschverschraubung stirnseitig am Innenring 1 angeschraubt, siehe die Schrauben 15, die in die mit einem Gewinde versehenen Anschlussbohrungen 8 im Innenring 1 eingeschraubt sind. Die zweite Welle 11 ist somit ebenfalls stirnseitig an der drehelastischen Kupplung 9 montiert. Allerdings ragt ein Bund der zweiten Welle 11 axial in den Innenring 1 hinein und trägt den Innenring 1 auf seinem äußeren Umfang. Hierdurch kann eine Zentrierung zwischen dem Innenring 1 und der zweiten Welle 11 erreicht werden, so dass keine Zentrierstifte zwischen der zweiten Welle 11 und dem Innenring 1 erforderlich sind.

Selbstverständlich ist es möglich, auch in der Verbindung zwischen dem Innenring 1 und der zweiten Welle 11 eine Zentrierung mittels Zentrierstiften alternativ oder zusätzlich zu dem gezeigten Zentrierbund herzustellen.

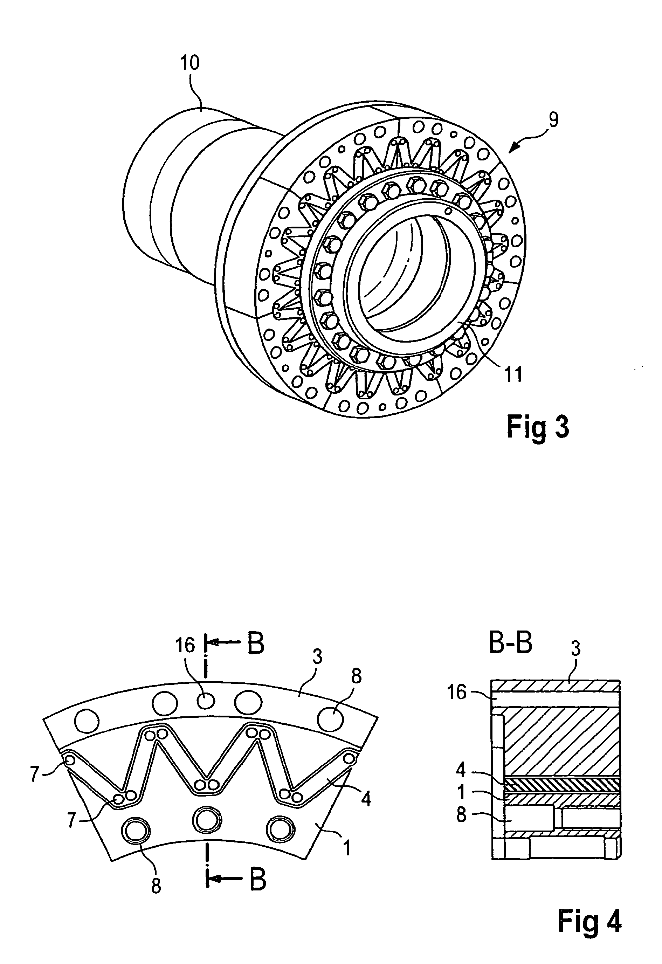

In der Figur 3 ist nochmals die drehelastische Kupplung 9 mit den beiden daran angeschlossenen Wellen 10 und 11 in einer dreidimensionalen Ansicht dargestellt.

Die Figur 4 zeigt ein Segment der drehelastischen Kupplung, umfassend ein Segment des Außenringes 3, des Innenringes 1 sowie das dort zwischen vorgesehene Elastomer 4 mit den Entlastungsöffnungen 7, in einem Zustand vor dem Anschluss von Wellen. Ferner erkennt man die Anschlussbohrungen 8, im Innenring 1 mit einem Gewinde versehen, und im Außenring 3 frei von einem Gewinde. In Umfangsrichtung gesehen in der Mitte jedes Segmentes des Außenringes 3 ist eine Zentrierbohrung 16 zum Einbringen des genannten Zentrierstiftes vorgesehen.

Wie man sieht, sind die Entlastungsöffnungen 7 in ihrem Durchmesser verhältnismäßig klein, nämlich kleiner als die Durchmesser der Anschlussbohrungen 8 und die Zentrierbohrungen 16. Sie werden jeweils vollständig vom Elastomer 4 umgeben.

## Patentansprüche

1. Drehelastische Kupplung,
1.1 mit einem Innenring (1) und einem den Innenring (1) in Umfangsrichtung unter Ausbildung eines Ringspaltes (2) umschließenden Außenring (3); wobei
1.2 in den Ringspalt (2) ein Elastomer (4) eingebracht ist, das am Innenring (1) und am Außenring (3) anvulkanisiert oder angeklebt ist und den Ringspalt (2) im Wesentlichen oder vollständig ausfüllt;
1.3 der Ringspalt (2) weist in Umfangsrichtung der Kupplung gesehen eine Mäanderform auf, so dass radial nach außen gerichtete Vorsprünge (5) des Innenrings (1) sich mit radial nach innen gerichteten Vorsprüngen (6) des Außenrings (3) hinterschneiden;
**dadurch gekennzeichnet, dass**
1.4 in Umfangsrichtung der Kupplung beidseits der Vorsprünge (5) des Innenrings (1) jeweils eine Entlastungsöffnung (7) in das Elastomer (3) eingebracht ist, welche radial außerhalb der radial nach außen gerichteten Vorsprünge (5) oder auf dem äußeren Radius der radial nach außen gerichteten Vorsprünge (5) positioniert ist, und
1.5 zusätzlich in Umfangsrichtung der Kupplung beidseits der Vorsprünge (6) des Außenrings (3) jeweils eine Entlastungsöffnung (7) in das Elastomer (3) eingebracht ist, die radial innerhalb der radial nach innen gerichteten Vorsprünge (6) oder auf dem inneren Radius der radial nach innen gerichteten Vorsprünge (6) positioniert ist.

2. Drehelastische Kupplung gemäß Anspruch 1, **dadurch gekennzeichnet, dass** in unmittelbarer Nähe zu jedem freien Ende jedes Vorsprungs (5, 6) in Umfangsrichtung auf jeder Seite des Vorsprungs (5, 6) jeweils eine, insbesondere eine einzige Entlastungsöffnung (7) eingebracht ist.

3. Drehelastische Kupplung gemäß einem der Ansprüche 1 oder 2, **dadurch gekennzeichnet, dass** der Innenring (1) und der Außenring (3) ausschließlich über das Elastomer (4) aneinander befestigt und somit in Umfangsrichtung, in Radialrichtung und in Axialrichtung elastisch aneinander angeschlossen sind.

4. Drehelastische Kupplung gemäß einem der Ansprüche 1 bis 3, **dadurch gekennzeichnet, dass** die Entlastungsöffnungen (7) vollständig vom Elastomer (4) umschlossen werden.

5. Drehelastische Kupplung gemäß einem der Ansprüche 1 bis 4, **dadurch gekennzeichnet, dass** die Entlastungsöffnungen (7) einen kreisrunden Querschnitt und insbesondere eine Zylinderform aufweisen.

6. Drehelastische Kupplung gemäß einem der Ansprüche 1 bis 5, **dadurch gekennzeichnet, dass** die Vorsprünge (5,6) des Innenrings (1) und/oder des Außenrings (3) zahnförmig sind und insbesondere jeweils ein spitzwinkliges, in Radialrichtung oder geneigt hierzu verlaufendes Dreieck bilden.

7. Drehelastische Kupplung gemäß einem der Ansprüche 1 bis 6, **dadurch gekennzeichnet, dass** der Außenring (3), welcher insbesondere einen kreisförmigen oder zylinderförmigen äußeren Umfang aufweist, und/oder der Innenring (1), welcher insbesondere einen kreisförmigen oder zylinderförmigen inneren Umfang aufweist, aus einzelnen, insbesondere gleich großen oder identischen Ringsegmenten zusammengesetzt ist.

8. Drehelastische Kupplung gemäß einem der Ansprüche 1 bis 7, **dadurch gekennzeichnet, dass** der Außenring (3) und/oder der Innenring (1) eine Vielzahl von Anschlussbohrungen (8) aufweist/aufweisen, die in einer axial ausgerichteten Stirnseite zum drehfesten Anschluss einer Welle (10, 11) oder sonstigen Anschlusselementes münden und insbesondere parallel zur Drehachse (13) der drehelastischen Kupplung ausgerichtet sind.

9. Wellenverbindung umfassend eine erste Welle (10) und eine zweite Welle (11), die in Axialrichtung, Radialrichtung und Umfangsrichtung mittels einer drehelastischen Kupplung (9) gemäß einem der Ansprüche 1 bis 8 elastisch aneinander angeschlossen sind, wobei
9.1 die erste Welle (10) formschlüssig mit dem Außenring (3) verbunden ist, insbesondere mit diesem verschraubt ist, und
9.2 die zweite Welle (11) formschlüssig mit dem Innenring (1) verbunden ist, insbesondere mit diesem verschraubt ist.

10. Wellenverbindung gemäß Anspruch 9, **dadurch gekennzeichnet, dass** die erste Welle (10) stirnseitig am Außenring (3) angeflanscht ist, und die zweite Welle (11) stirnseitig am Innenring (1), insbesondere auf der der ersten Welle (10) axial abgewandten Stirnseite, angeflanscht ist.

11. Wellenverbindung gemäß Anspruch 10, **dadurch gekennzeichnet, dass** wenigstens eine der beiden Wellen (10, 11) frei von einem Zentrierbund zum Anschluss an die drehelastische Kupplung (9) und insbesondere über Zentrierstifte (12) zentriert an dem jeweiligen Ring - Außenring (3) oder Innenring (1) - angeflanscht ist.

12. Antriebsstrang, insbesondere Fahrzeugantriebsstrang wie Schienenfahrzeugantriebsstrang, umfassend eine Antriebsmaschine und von dieser angetriebene Antriebsräder, **dadurch gekennzeichnet, dass** in der Triebverbindung zwischen der Antriebsmaschine und den Antriebsrädern eine Wellenverbindung gemäß einem der Ansprüche 9 bis 11 eingebracht ist.

13. Verfahren zum Herstellen einer drehelastischen Kupplung (9) gemäß einem der Ansprüche 1 bis 8, **gekennzeichnet durch** die folgenden Schritte:
13.1 der Innenring (1) und der Außenring (3) oder Ringsegmente derselben werden getrennt voneinander hergestellt;
13.2 der Innenring (1) und der Außenring (3) werden konzentrisch ineinander positioniert, so dass sich der Ringspalt (2) ergibt;
13.3 der Außenring (3) wird auf seinem radial inneren Umfang und der Innenring (1) wird auf seinem radial äußeren Umfang mit einem Haftvermittler versehen;
13.4 es wird eine vorgegebene Anzahl von Zylinderstiften oder anders gestalteten Stiften bereitgestellt, deren äußere Oberfläche frei von einem Haftvermittler ist;
13.5 der Ringspalt (2) wird mit einem Elastomer (4) ausgegossen, wobei vor dem Gießen, beim Gießen oder nach dem Gießen vor der Aushärtung des Elastomers (4) die Stifte in das Elastomer (4) eingebracht werden, anschließend das Elastomer (4) teilweise oder vollständig ausgehärtet wird, und nach dem Aushärten die Stifte aus dem Elastomer (4) entfernt werden.

14. Verfahren gemäß Anspruch 13, **dadurch gekennzeichnet, dass** das Elastomer (4) durch Aufheizen, insbesondere Backen, des Innenrings (1), des Außenrings (3), des Elastomers (4) und der Stifte ausgehärtet wird.

15. Verfahren gemäß Anspruch 14, **dadurch gekennzeichnet, dass** erst nach dem Aufheizen und insbesondere einem darauf folgenden Abkühlen Zentrierbohrungen (16) in den Innenring (1) und/oder den Außenring (3) eingebracht werden und/oder Zentrierstifte (12) am Innenring (1) und/oder am Außenring (3) montiert werden, zum Zentrieren der drehelastischen Kupplung (9) bei der Montage in einem Triebstrang, insbesondere zwischen zwei Wellen (10, 11).

## Claims

1. A rotary elastic coupling,
1.1 fitted with an inner ring (1) and with an outer ring (3) surrounding the inner ring (1) around the periphery by forming an annular slit (2); wherein
1.2 an elastomer (4) is arranged in the annular slit (2), which is vulcanised or glued to the inner ring (1) and to the outer ring (3) and fills up the annular slit (2) substantially or completely;
1.3 the annular slit (2) is meander-shaped around the periphery of the coupling, so that radially outward protrusions (5) of the inner ring (1) undercut radially inward protrusions (6) of the outer ring (3);
**characterised in that**
1.4 a relief opening (7) is provided in the elastomer (3) around the periphery of the coupling on both sides of the protrusions (5) of the inner ring (1),which is positioned radially outside the radially outward protrusions (5) or on the outer radius of the radially outward protrusions (5), and
1.5 additionally a relief opening (7) is inserted in the elastomer (3) around the periphery of the coupling on both sides of the protrusions (6) of the outer ring (3), which is positioned radially inside the radially inner protrusions (6) or on the inner radius of the radially inward protrusions (6).

2. A rotary elastic coupling according to claim 1, characterised that a, in particular a single relief opening (7) is arranged in immediate proximity of each free end of every protrusion (5, 6) around the periphery on each side of the protrusion (5, 6).

3. A rotary elastic coupling according to one of claims 1 or 2, **characterised in that** the inner ring (1) and the outer ring (3) attached to one another exclusively via the elastomer (4) and consequently connected elastically to one another around the periphery, in radial direction and in axial direction.

4. A rotary elastic coupling according to one of claims 1 to 3, **characterised in that** the relief openings (7) are completely surrounded by the elastomer (4).

5. A rotary elastic coupling according to one of claims 1 to 4, **characterised in that** the relief openings (7) have a circular section and are in particular cylindrical in shape.

6. A rotary elastic coupling according to one of claims 1 to 5, **characterised in that** the protrusions (5, 6) of the inner ring (1) and/or of the outer ring (3) are dented and form in particular an acute triangle in radial direction or tilted for that purpose.

7. A rotary elastic coupling according to one of claims 1 to 6, **characterised in that** the outer ring (3), which presents in particular a circular or cylindrical outer periphery, and/or the inner ring (1); which presents in particular a circular or cylindrical inner periphery, is composed of individual, in particular same-sized or identical ring segments.

8. A rotary elastic coupling according to one of claims 1 to 7, that the outer ring (3) and/or the inner ring (1) includes/include a great number of connecting bores (8) ending in an axially oriented front for torque-proof connection of a shaft (10, 11) or other connecting element and in particular parallel to the rotational axis (13) of the rotary elastic coupling.

9. A shaft connection according to one of claims 1 to 8, comprising a first shaft (10) and a second shaft (11), which are connected elastically to one another in axial direction, radial direction and around the periphery via a rotary elastic coupling (9) according to one of claims 1 to 9, wherein
9.1 the first shaft (10) is connected in positive engagement with the outer ring (3), in particular screwed with said element, and
9.2 the second shaft (11) is connected in positive engagement with the inner ring (1), in particular screwed with said element.

10. A shaft connection according to claim 9, **characterised in that** the first shaft (10) is flanged frontally on the outer ring (3) and the second shaft (11) is flanged frontally on the inner ring (1), in particular on the front side axially opposed to the first shaft (10).

11. A shaft connection according to claim 10, **characterised in that** at least one of both shafts (10, 11) is flanged to the corresponding ring - outer ring (3) or inner ring (1) - centred without any centring collar, to the rotary elastic coupling (9) and in particular via centring pins (12).

12. A drive train, in particular a vehicle drive train such as a track vehicle drive train, including a drive machine and drive wheels driven by said machine, **characterised in that** the drive connection houses a shaft connection according to one of claims 9 to 11 between the drive machine and the drive wheels.

13. A method for manufacturing a rotary elastic coupling (9) according to one of claims 1 to 8, **characterised by** the following steps:
13.1 the inner ring (1) and the outer ring (3) or their ring segments are manufactured separately from one another;
13.2 the inner ring (1) and the outer ring (3) are positioned concentrically in one another, to form the annular slit (2);
13.3 the outer ring (3) is coated with a bonding agent on its radially inner periphery and the inner ring (1) is coated with a bonding agent on its radially outer periphery;
13.4 a predetermined number of cylindrical pins or other shaped pins are prepared, whose outer surface is exempt from any bonding agent;
13.5 the annular slit (2) is filled with an elastomer (4), wherein the pins are placed in the elastomer (4) before, during or after the casting process before said elastomer (4) has hardened, then the elastomer (4) sets partially or completely,
and the pins are removed from the elastomer (4) after said elastomer has hardened.

14. A method according to claim 13, **characterised in that** the elastomer (4) sets wherein the inner ring (1), the outer ring (3) the elastomer (4) and the pins are heated, in particular baked.

15. A method according to claim 14, **characterised in that** only after heating and in particular consecutive cooling, centring bores (16) are placed in the inner ring (1) and/or the outer ring (3) and/or centring pins (12) are installed on the inner ring (1) and/or on the outer ring (3), for centring the rotary elastic coupling (9) during assembly in a drive train, in particular between two shafts (10, 11).

## Revendications

1. Dispositif d'accouplement flexible en rotation,
1.1 possédant une bague interne (1) et une bague externe (3) entourant la bague interne (1) dans le sens de la circonférence en formant un espace annulaire (2);
dans lequel
1.2 un élastomère (4) est prévu dans l'espace annulaire (2), qui est vulcanisé ou collé au niveau de la bague interne (1) et de la bague externe (3) et remplit sensiblement ou complètement l'espace annulaire (2);
1.3 l'espace annulaire (2) présente une forme de méandre dans le sens de la circonférence du dispositif d'accouplement, de sorte que des saillies (5) de la bague interne (1), dirigées radialement vers l'extérieur, coupent des saillies (6) de la bague externe (3), dirigés radialement vers l'intérieur;
**caractérisé en ce que**
1.4 une ouverture de décharge (7) est prévue dans l'élastomère (3) dans le sens de la circonférence du dispositif d'accouplement respectivement des deux côtés des saillies (5) de la bague interne (1), laquelle ouverture est positionnée radialement à l'extérieur des saillies (5) dirigées radialement vers l'extérieur ou bien sur le rayon externe des saillies (5) dirigées radialement vers l'extérieur, et
1.5 une ouverture de décharge (7) est prévue dans l'élastomère (3) dans le sens de la circonférence du dispositif d'accouplement respectivement des deux côtés des saillies (6) de la bague interne (3), laquelle ouverture est positionnée radialement à l'intérieur des saillies (6) dirigées radialement vers l'intérieur ou bien sur le rayon interne des saillies (6) dirigées radialement vers l'intérieur.

2. Dispositif d'accouplement flexible en rotation selon la revendication 1, **caractérisé en ce qu'**une ouverture de décharge (7) respectivement, et en particulier une seule, est prévue à proximité immédiate de chaque extrémité libre de chaque saillie (5, 6) dans le sens de la circonférence de chaque côté de la saillie (5, 6).

3. Dispositif d'accouplement flexible en rotation selon l'une des revendications 1 ou 2, **caractérisé en ce que** la bague interne (1) et la bague externe (3) sont exclusivement fixées l'une à l'autre au-dessus de l'élastomère et sont donc connectées l'une à l'autre élastiquement dans le sens de la circonférence, dans la direction radiale et dans la direction axiale.

4. Dispositif d'accouplement flexible en rotation selon l'une des revendications 1 à 3, **caractérisé en ce que** les ouvertures de décharge (7) sont entourées complètement par l'élastomère (4).

5. Dispositif d'accouplement flexible en rotation selon l'une des revendications 1 à 4, **caractérisé en ce que** les ouvertures de décharge (7) présentent une section transversale orbiculaire et en particulier une forme cylindrique.

6. Dispositif d'accouplement flexible en rotation selon l'une des revendications 1 à 5, **caractérisé en ce que** les saillies (5, 6) de la bague interne (1) et/ou de la bague externe (3) sont en forme de dent et forment en particulier respectivement un triangle à angle aigu, s'étendant dans la direction radiale ou bien incliné par rapport à celle-ci.

7. Dispositif d'accouplement flexible en rotation selon l'une des revendications 1 à 6, **caractérisé en ce que** la bague externe (3), qui présente en particulier une circonférence externe circulaire ou cylindrique, et/ou la bague interne (1), qui présente en particulier une circonférence interne circulaire ou cylindrique, est composée de individuelles, en particulier de la même taille ou identiques segments annulaires.

8. Dispositif d'accouplement flexible en rotation selon l'une des revendications 1 à 7, **caractérisé en ce que** la bague externe (3) et/ou la bague interne (1) présentent une pluralité d'alésages de raccordement (8), qui débouchent dans une face avant orientée axialement pour obtenir un raccordement fixe en rotation d'un arbre (10, 11) ou un autre élément de raccordement et en particulier sont disposés parallèlement à l'axe de rotation (13) du dispositif d'accouplement flexible en rotation.

9. Liaison d'arbre de transmission, comprenant un premier arbre (10) et un second arbre (11), qui sont connectés l'un à l'autre élastiquement dans la direction axiale, la direction radiale et la direction circonférentielle à l'aide d'un dispositif d'accouplement flexible en rotation (9) selon l'une des revendications 1 à 8, dans lequel
9.1 le premier arbre (10) est solidaire de la bague externe (3) par engagement positif, en particulier est vissé à celle-ci, et
9.2 le second arbre (11) est solidaire de la bague interne (1) par engagement positif, en particulier est vissé à celle-ci.

10. Liaison d'arbre de transmission selon la revendication 9, **caractérisée en ce que** le premier arbre (10) est bridé sur la face avant au niveau de la bague externe (3), et que le second arbre (11) est bridé sur la face avant au niveau de la bague interne (1), en particulier sur la face frontale tournant le dos axialement au premier arbre (10).

11. Liaison d'arbre de transmission selon la revendication 10, **caractérisée en ce qu'**au moins l'un des deux arbres (10, 11) est bridé sans collier de centrage pour raccordement au dispositif d'accouplement flexible en rotation (9) et en particulier par le biais de goupilles de centrage (12), pour être centré au niveau de la bague respective - bague externe (3) ou bague interne (1).

12. Train d'entraînement, en particulier train d'entraînement de véhicule comme par exemple un train d'entraînement pour véhicule sur rails, comprenant une machine d'entraînement et des roues d'entraînement entraînées par celle-ci, **caractérisée en ce qu'**une liaison d'arbre de transmission selon l'une des revendications 9 à 11 est prévue dans la liaison motrice entre la machine d'entraînement et les roues d'entraînement.

13. Procédé de fabrication d'un dispositif d'accouplement flexible en rotation (9) selon l'une des revendications 1 à 8, présentant les caractéristiques suivantes:
13.1 la bague interne (1) et la bague externe (3) ou des segments annulaires de celle-ci sont produites séparément l'une de l'autre;
13.2 la bague interne (1) èt la bague externe (3) sont positionnées concentriquement l'une dans l'autre pour obtenir l'espace annulaire (2);
13.3 la bague externe (3) est pourvue d'un promoteur d'adhérence sur sa circonférence radialement interne et la bague interne (1) est pourvue d'un promoteur d'adhérence sur sa circonférence radialement externe;
13.4 un nombre prédéterminé de goupilles cylindriques ou de goupilles conçues d'une autre manière est prévu, dont la surface externe ne contient pas de promoteur d'adhérence;
13.5 l'espace annulaire (2) est coulé avec un élastomère (4), tandis que l'on introduit les goupilles dans l'élastomère (4) avant le coulage, lors du coulage ou bien après le coulage mais avant le durcissement de l'élastomère (4), l'élastomère (4) durcissant alors partiellement ou complètement, et les goupilles étant retirées de l'élastomère (4) après durcissement.

14. Procédé selon la revendication 13, **caractérisé en ce que** l'élastomère (4) durcit par chauffage, en particulier cuisson, de la bague interne (1), de la bague externe (3) de l'élastomère (4) et des goupilles.

15. Procédé selon la revendication 14, **caractérisé en ce que** seulement après le chauffage et en particulier après un refroidissement consécutif, l'on introduit des alésages de centrage (16) dans la bague interne (1) et/ou la bague externe (3) et/ou l'on pose des goupilles de centrage (12) sur la bague interne (1) et/ou sur la bague externe (3) pour le centrage du dispositif d'accouplement flexible en rotation (9) lors du montage dans une transmission, en particulier entre deux arbres (10, 11).
